# EUROPÄISCHE PATENTSCHRIFT

(11) **EP 2 666 885 B1**
(45) Veröffentlichungstag und Bekanntmachung des Hinweises auf die Patenterteilung: **14.09.2016**
(21) Anmeldenummer: 12168994.7
(22) Anmeldetag: 23.05.2012
(51) Int. Cl.: C23F 13/04, C23F 13/22, F16L 58/00, G01N 17/02

(54) **Korrosionsschutzvorrichtung**
Anti-corrosion device
Dispositif de protection contre la corrosion

(43) Veröffentlichungstag der Anmeldung: 27.11.2013
(73) Patentinhaber: Weilekes Elektronik GmbH, 45886 Gelsenkirchen (DE)
(72) Erfinder: Weilekes, Thorsten, 75223 Niefern-Öschelbronn (DE)
(74) Vertreter: Ruckh, Rainer Gerhard

(56) Entgegenhaltungen:
- WO-A1-2007/115354
- WO-A1-2009/019717
- FR-A1- 2 759 512
- US-A1- 2007 035 315

## Beschreibung

Die Erfindung betrifft eine Korrosionsschutzvorrichtung gemäß dem Oberbegriff des Anspruchs 1.

Mit derartigen Korrosionsschutzvorrichtungen erfolgt allgemein ein kathodischer Korrosionsschutz für Rohrleitungen, in welchen gasförmige oder flüssige Medien geführt werden. Beispiele für derartige Rohrleitungen sind Gas-, Öl- oder Wasserpipelines, die insbesondere unterirdisch oder unterseeisch verlegt werden. Das Funktionsprinzip des kathodischen Korrosionsschutzes besteht darin, dass an vorgegebenen Stellen der Rohrleitungen eine Spannung beziehungsweise ein Strom angelegt wird, um dadurch elektrochemische Reaktionen, die das vorzugsweise metallische Material der Rohrleitungen angreifen könnten, zu vermeiden.

Bekannte Korrosionsschutzvorrichtungen dieser Art weisen als Spannungsquelle Gleichrichtersysteme mit zugeordneten Regeleinheiten in Form von Strom- oder Spannungsregelungen auf, so dass als Ausgangsgrößen geregelte Spannungen oder Ströme generiert werden, die über der Rohrleitung zugeführt werden.

Um eine fortlaufende Kontrolle der auf die Rohrleitung eingespeisten Spannungen und Ströme zu gewährleisten, ist es bekannt Überwachungseinheiten einzusetzen, die vorzugsweise als drahtlos arbeitende Fernüberwachungseinheiten ausgebildet sind. Derartige Überwachungseinheiten sind typischerweise jeweils an der Spannungsquelle und der Rohrleitung eingebaut und melden in vorgegebenen Zeitabständen an entfernt liegende Überwachungszentralen, ob die in die Rohrleitung eingespeisten Ströme oder Spannungen vorgegebenen Sollwerten entsprechen. Die Datenübertragung erfolgt beispielsweise über Funksignale.

Mit bekannten Gleichrichtersystemen sind nur grobe Regelungen für relativ hohe Ströme im Ampere-Bereich möglich. Dies stellt insbesondere ein Problem für Rohrleitungen neuerer Bauart dar. Derartige Rohrleitungen sind werkseitig bereits mit guten Isolierungen versehen. Dies führt dazu, dass für einen kathodischen Korrosionsschutz derartige Rohrleitungen nur noch Ströme im Milli-Ampere-Bereich bei Spannungen von wenigen Volt benötigt werden, das heißt es sind noch sehr geringe elektrische Leistungen erforderlich.

Die US 2007/0035315 A1 betrifft ein Verfahren zum Testen einer Korrosionsschutzvorrichtung für eine Rohrleitung. Diese Korrosionsschutzvorrichtung weist eine Spannungsquelle und eine Regeleinheit zur Generierung einer geregelten Spannung oder eines geregelten Stroms in der Rohrleitung auf. Die Regeleinheit weist einen spannungsgeregelten Gleichrichter auf. Weiterhin ist eine Überwachungseinheit, die vorzugsweise mit der Basis eines Mobiltelefons ausgebildet ist, vorgesehen.

Die WO 2007/115354 A1 betrifft eine Korrosionsschutzvorrichtung für einen metallischen Körper. Die Kontrollvorrichtung umfasst einen Mikroprozessor und einen Pulsweitengenerator als Kontrolleinheit, die einen Halbleiterschalter ansteuert. Dieser treibt einen Transformationsschaltkreis, der wiederum einen LC-Schaltkreis steuert, der dann eine Spannung auf den metallischen Körper ausgibt. Die ausgegebene Spannung wird mit einem Feedback-Schaltkreis erfasst.

Die FR 2 759 512 A1 betrifft eine Korrosionsschutzvorrichtung mit einem Prozessor der einen Pulsweitenmodulator ansteuert. Dieser steuert ein Halbleiter-Relais an. Durch die Ansteuerung mit dem Halbleiter-Relais wird ein Transformator entladen, der dann eine Batterie auflädt.

Der Erfindung liegt die Aufgabe zugrunde, eine Korrosionsschutzvorrichtung der eingangs genannten Art bereitzustellen, welche bei geringem konstruktivem Aufwand eine hohe Funktionalität und Zuverlässigkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die erfindungsgemäße Korrosionsschutzvorrichtung dient zum Schutz einer ein flüssiges oder gasförmiges Medium führenden Rohrleitung und umfasst eine eine elektrische Spannung generierende Spannungsquelle, sowie eine Regeleinheit. Mittels der Regeleinheit wird eine geregelte Spannung oder ein geregelter Strom generiert und der Rohrleitung zugeführt. Eine Überwachungseinheit ist zur Erfassung von Korrosionsschutzparametern vorgesehen. Die Regeleinheit weist ein mittels einer Pulsweitenmodulation angesteuertes elektronisches Relais auf, wobei die Regeleinheit mit dem elektronischen Relais in der Überwachungseinheit integriert ist. Das elektronische Relais wird sowohl zur Durchführung von Regelvorgängen als auch zur Durchführung von Überwachungsfunktionen genutzt.

Mit der erfindungsgemäßen Regeleinheit können sehr schnelle Regelungsvorgänge durchgeführt werden, wobei besonders vorteilhaft ist, dass mit der Regeleinheit Regelungen innerhalb eines großen Spannungsbereichs beziehungsweise Strombereichs durchgeführt werden können. Dies beruht darauf, dass als wesentliche Komponente ein elektronisches Relais eingesetzt wird. Im Gegensatz zu üblicherweise eingesetzten elektromechanischen Relais weisen elektronische Relais keine trägheitsbehafteten mechanischen Schaltelemente auf. Damit können mit dem elektronischen Relais sehr schnell, vorzugsweise im Millisekundenbereich liegende Schaltvorgänge durchgeführt werden, so dass dementsprechend schnelle Regelungsvorgänge durchgeführt werden können und zwar innerhalb eines großen Spannungs- und Strombereichs. Zudem sind derartige elektronische Relais im Gegensatz zu elektromechanischen Relais nicht verschleißanfällig.

Mit der erfindungsgemäßen Regeleinheit werden schnelle und präzise Regelungsvorgänge insbesondere auch dadurch ermöglicht, dass das elektronische Relais durch eine Pulsweitenmodulation angesteuert wird. Mit dieser Pulsweitenmodulation werden in schneller zeitlicher Folge Ein- und Ausschaltvorgänge des elektronischen Relais erhalten. Durch die Vorgabe einer bestimmten Pulsweise bei der Pulsweitenmodulation kann eine einzuregelnde Spannung oder ein einzuregelnder Strom sehr schnell und präzise auf einen Sollwert eingeregelt werden. Dabei ist insbesondere vorteilhaft, dass mit der Regeleinheit wahlweise eine der Rohrleitung zuzuführende Spannung oder auch ein der Rohrleitung zuzuführender Strom, der sich aus dem Widerstand der Zuleitung zur Rohrleitung und dem jeweiligen Spannungswert ergibt, eingeregelt werden kann.

Dies wird insbesondere auch durch die erfindungsgemäße Verwendung des elektronischen Relais erreicht, welches vorteilhaft Leistungshalbleiter wie zum Beispiel MOSFET-Transistoren als Schaltelemente aufweist.

Damit kann die erfindungsgemäße Korrosionsschutzvorrichtung für ein breites Spektrum von zu schützenden Rohrleitungen eingesetzt werden. Insbesondere kann die erfindungsgemäße Korrosionsschutzvorrichtung zum kathodischen Korrosionsschutz von älteren, schlecht isolierten Rohrleitungen eingesetzt werden, welchen Ströme im Bereich von einem oder mehreren Ampere bis zu hundert Ampere zugeführt werden müssen. Ebenso kann die erfindungsgemäße Korrosionsschutzvorrichtung zum kathodischen Korrosionsschutz von neueren, gut isolierten Rohrleitungen eingesetzt werden, welchen nur Ströme im Milli-Ampere-Bereich zugeführt werden müssen.

Ein weiterer wesentlicher Vorteil der Erfindung besteht darin, dass die erfindungsgemäße Regeleinheit mit dem elektronischen Relais in einer Überwachungseinheit integriert ist, mittels derer Überwachungsfunktionen für die erfindungsgemäße Korrosionsschutzvorrichtung durchgeführt werden. Damit wird ein besonders kostengünstiger Aufbau der erfindungsgemäßen Korrosionsschutzvorrichtung erreicht. Dieser Vorteil wird dadurch noch verstärkt, dass Bauteile, insbesondere das elektronische Relais, sowohl zur Durchführung der Regelungsvorgänge als auch zur Durchführung von Überwachungsfunktionen genutzt werden können.

Generell werden mit der Überwachungseinheit die Spannung und/oder der Strom, die der Rohrleitung zugeführt werden, überwacht.

Die Bestimmung dieser Korrosionsschutzparameter oder weiterer Korrosionsschutzparameter kann vorteilhaft dadurch erfolgen, dass in vorgegebenen Zyklen in der Überwachungseinheit die der Rohrleitung zugeführte Spannung abgeschaltet und dann wieder eingeschaltet wird. Dann können als Korrosionsschutzparameter die sich dabei ergebenden Ein- und Ausschaltpotentiale erfasst werden. Für diese Schaltvorgänge kann vorteilhaft das elektronische Relais verwendet werden, das heißt es müssen in der Überwachungseinheit außer dem elektronischen Relais keine weiteren Schaltmittel vorgesehen sein.

Ein weiterer wesentlicher Vorteil der erfindungsgemäßen Korrosionsschutzvorrichtung besteht darin, dass durch die in der Überwachungseinheit integrierte Regeleinheit die Spannungsquelle konstruktiv einfach ausgebildet sein kann, da dort keine weiteren Mittel für eine Regelung vorgesehen sein müssen.

Insbesondere kann auf aufwändige Gleichrichtersysteme verzichtet werden, wodurch sich gegenüber herkömmlichen Korrosionsschutzvorrichtungen ein erheblicher Kostenvorteil ergibt.

Besonders vorteilhaft ist die Spannungsquelle von einem einfachen Netzteil gebildet, wie zum Beispiel einem Steckernetzteil.

Alternativ ist eine Spannungsquelle in Form einer Batterie oder eines Akkumulators vorgesehen.

Die erfindungsgemäße Korrosionsschutzvorrichtung umfasst generell eine Mehrfachanordnung von Spannungsquellen und zugeordneten Überwachungseinheiten, wobei die einzelnen Überwachungseinheiten Fernüberwachungseinheiten bilden, die berührungslos Überwachungsdaten an eine zentrale Einheit übermitteln.

Ein weiterer wesentlicher Vorteil der erfindungsgemäßen Korrosionsschutzvorrichtung besteht darin, dass in das erfindungsgemäße Regelsystem weitere Informationen, die von Sensoren oder dergleichen generiert werden, mit einbezogen werden können. Die Sensoren bilden ebenso wie die Regeleinheiten dezentrale Einheiten. Da Informationen von dezentralen Sensoren in den Regeleinheiten vor Ort ausgewertet werden können, entfallen aufwändige Transfermechanismen derartiger Informationen zu Zentraleinheiten. Zudem wird durch die dezentrale Informationsverarbeitung eine rationellere, schnellere Datenauswertung erhalten.

Die Erfindung wird im Folgenden anhand der Zeichnungen erläutert. Es zeigen:

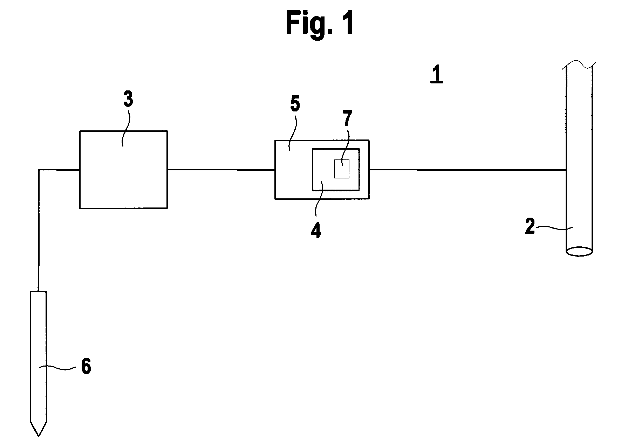

- Figur 1:: Schematische Darstellung eines Ausführungsbeispiels der erfindungsgemäßen Korrosionsschutzvorrichtung.

Figur 1 zeigt ein Ausführungsbeispiel einer Korrosionsschutzvorrichtung 1, mittels derer ein kathodischer Korrosionsschutz für eine Rohrleitung 2 bereitgestellt wird, in welcher ein gasförmiges oder flüssiges Medium geführt wird. Die Rohrleitung 2 kann beispielsweise von einer unterirdisch oder unterseeisch verlegten Gas-, Öl- oder Wasserpipeline gebildet sein.

Als Bestandteil der Korrosionsschutzvorrichtung 1 sind in Figur 1 eine Spannungsquelle 3 und eine dieser nachgeordnete und elektrisch mit dieser verbundene Regeleinheit 4 vorgesehen, welche in einer Überwachungseinheit 5 integriert ist.

Figur 1 zeigt weiterhin eine Anode 6. Bei einer solchen Anode 6 handelt es sich typisch um eine Eisen-Silizium-Anode in einer niederohmigen Koksbettung, die in dem die Rohrleitung 2 umgebenden Erdreich angeordnet ist. Diese oder mehrere Anoden sind, ebenso wie die Rohrleitung 2, die die Kathodenseite der Anordnung bildet, an die Korrosionsschutzvorrichtung 1 angeschlossen.

Die mit der Spannungsquelle 3 generierte Spannung wird der Überwachungseinheit 5 zugeführt. In der in der Überwachungseinheit 5 integrierten Regeleinheit 4 wird dann eine Spannungs- oder Stromregelung durchgeführt, so dass eine geregelte Spannung oder ein geregelter Strom erzeugt und auf die Rohrleitung 2 geführt wird. Der dadurch auf der Rohrleitung 2 fließende kathodische Schutzstrom verhindert elektrochemische Reaktionen, die das metallische Material der Rohrleitung 2 angreifen könnten.

In Figur 1 ist nur eine Einheit bestehend aus einer Spannungsquelle 3 und einer Überwachungseinheit 5 dargestellt. Allgemein umfasst die Korrosionsschutzvorrichtung 1 mehrere derartige, vorzugsweise identisch ausgebildete Einheiten um an mehreren, vorgegebenen Stellen der Rohrleitung 2 einen kathodischen Schutzstrom einzuspeisen.

Bei dem in Figur 1 dargestellten Ausführungsbeispiel besteht die Spannungsquelle 3 aus einem einfachen Steckernetzteil. Alternativ können als Spannungsquellen 3 auch Batterien oder Akkumulatoren eingesetzt werden.

Die Regeleinheit 4 umfasst eine Rechnereinheit sowie ein elektronisches Relais 7. Das elektronische Relais 7 weist ein oder mehrere aus Halbleiterelementen bestehende Schaltelemente auf. Die Halbleiterelemente sind von Leistungshalbleitern wie MOSFET-Transistoren gebildet.

Zur Durchführung von Regelvorgängen wird eine Pulsweitenmodulation verwendet. Mit dieser Pulsenweitenmodulation können zeitlich schnell variierende Ein- und Ausschaltzeiten des elektronischen Relais 7 vorgegeben werden. Durch diese Pulsweitenmodulation kann mit der Spannung der Spannungsquelle 3 als Eingangsgröße die von der Regeleinheit 4 ausgegebene Spannung schnell und präzise auf einen in der Regeleinheit 4 vorgegebenen Sollwert eingeregelt werden. Durch die von der Regeleinheit 4 ausgegebenen geregelten Spannung und dem elektrischen Widerstand der Zuleitung von der Regeleinheit 4 zur Rohrleitung 6 ergibt sich dann ein kathodischer Schutzstrom, der auf die Rohrleitung 2 geführt wird. Je nach Vorgabe der Sollwerte kann in der Regeleinheit 4 sowohl eine Spannungsregelung als auch eine Stromregelung durchgeführt werden.

Mit der in der Regeleinheit 4 durchgeführten Regelung kann ein großer Strom- und Spannungsbereich abgedeckt werden. So können insbesondere an die Ausbildung der Rohrleitung 2 angepasste Werte des kathodischen Schutzstroms eingeregelt werden. Dieser kathodische Schutzstrom kann je nach Ausbildung der Rohrleitung 2 im Ampere-Bereich oder im Milli-Ampere-Bereich liegen. Selbst Ströme im Bereich von bis zu hundert Ampere sind möglich.

Mit der oder den Überwachungseinheiten 5 der Korrosionsschutzvorrichtung 1 erfolgt eine regelmäßige, fortlaufende Kontrolle und Überwachung aller wesentlichen Korrosionsschutzparameter der Korrosionsschutzvorrichtung 1, insbesondere der Spannungen und Ströme, mit denen die Rohrleitung 2 beaufschlagt wird.

Die Überwachungseinheiten 5 bilden dabei Fernüberwachungseinheiten, die ihre Kontrollsignale berührungslos, vorzugsweise mittels Funksignalen, an entfernt liegende zentrale Einheiten übermitteln. Weiterhin ist auch eine Fernprogrammierung, das heißt Parametrierung der Überwachungseinheit 5 möglich, beispielsweise über Mobiltelefone. Mit dieser Parametrierung kann einerseits der Funktionsumfang der mit den Überwachungseinheiten 5 durchgeführten Kontrollfunktionen vorgegeben werden. Weiterhin kann auch die Art der Regelung in der Regeleinheit 4 über diese Parametrierung vorgegeben werden. Generell ist auch eine drahtgebundene Datenübertragung, beispielsweise über Ethernet, möglich.

Der Funktionsumfang der Überwachungseinheit 5 umfasst die Erfassung aller wesentlichen Korrosionsschutzparameter zum Betrieb der Korrosionsschutzvorrichtungen 1. Neben einer direkten Erfassung der von der Regeleinheit 4 ausgegebenen Spannungen und Ströme werden in der Überwachungseinheit 5 als weitere Kontrollgrößen sogenannte Ein- und Ausschaltpotentiale ermittelt. Hierzu wird das elektronische Relais 7 der Regeleinheit 4 mitgenutzt. Bei Einschalten des elektronischen Relais 7 wird das Einschaltpotential auf der Leitung zur Rohrleitung 2 ermittelt. Bei Ausschalten des elektronischen Relais 7 wird entsprechend das Ausschaltpotential ermittelt.

Weiterhin werden als Korrosionsschutzvorrichtungen 1 auch Kontrollgrößen der Überwachungseinheit 5 selbst ermittelt. Hierzu gehören Daten über den Zustand von Funkübertragungsmitteln zum Senden und Empfangen von Funksignalen, Daten über externe Einflüsse wie der Umgebungs-Temperatur, sowie Daten über den Sendezustand einer in einer Überwachungseinheit 5 integrierten Spannungsversorgung, wie zum Beispiel einer Batterie. Schließlich können als Korrosionsschutzparameter Daten über den Synchronitätszustand der einzelnen Überwachungseinheiten 5 ermittelt werden. Vorzugweise werden nämlich die einzelnen Überwachungseinheiten 5 synchron betrieben um zu gleichen Zeiten vorgegebene Kontrollsignale zu generieren.

Die einzelnen Überwachungseinheiten 5 bilden somit ein Datenlogger-System, anhand dessen Kontrollgrößen die Korrosionsschutzvorrichtung 1 komplett überwacht werden kann.

### Bezugszeichenliste

- (1): Korrosionsschutzvorrichtung
- (2): Rohrleitung
- (3): Spannungsquelle
- (4): Regeleinheit
- (5): Überwachungseinheit
- (6): Anode
- (7): elektronisches Relais

## Patentansprüche

1. Korrosionsschutzvorrichtung (1) für eine ein flüssiges oder gasförmiges Medium führende Rohrleitung (2), mit einer eine elektrische Spannung generierenden Spannungsquelle (3) und einer Regeleinheit (4) mittels derer eine geregelte Spannung oder ein geregelter Strom generiert und der Rohrleitung (2) zuführbar ist, **dadurch gekennzeichnet, dass** eine Überwachungseinheit (5) zur Erfassung von Korrosionsschutzparametern vorgesehen ist, dass die Regeleinheit (4) ein mittels einer Pulsweitenmodulation angesteuertes elektronisches Relais (7) aufweist, dass die Regeleinheit (4) mit dem elektronischen Relais (7) in der Überwachungseinheit (5) integriert ist, und dass das elektronische Relais (7) sowohl zur Durchführung von Regelvorgängen als auch zur Durchführung von Überwachungsfunktionen genutzt ist.

2. Korrosionsschutzvorrichtung nach Anspruch 1, **dadurch gekennzeichnet, dass** das elektronische Relais (7) aus Halbleitern bestehende Schaltelemente aufweist.

3. Korrosionsschutzvorrichtung nach einem der Ansprüche 1 oder 2, **dadurch gekennzeichnet, dass** mittels der Pulsweitenmodulation Ein- und Ausschaltzeiten des elektronischen Relais (7) vorgegeben werden.

4. Korrosionsschutzvorrichtung nach einem der Ansprüche 1 bis 3, **dadurch gekennzeichnet, dass** die Spannungsquelle (3) von einem Netzteil gebildet ist.

5. Korrosionsschutzvorrichtung nach einem der Ansprüche 1 bis 4, **dadurch gekennzeichnet, dass** eine Spannungsquelle (3) in Form einer Batterie oder eines Akkumulators vorgesehen ist.

6. Korrosionsschutzvorrichtung nach einem der Ansprüche 1 bis 5, **dadurch gekennzeichnet, dass** die Überwachungseinheit (5) zwischen der Spannungsquelle (3) und der Rohrleitung (2) eingebaut ist.

7. Korrosionsschutzvorrichtung nach einem der Ansprüche 1 bis 6, **dadurch gekennzeichnet, dass** die Überwachungseinheit (5) ausgebildet ist, die Spannung und/oder der Strom, die der Rohrleitung (2) zugeführt werden, zu überwachen.

8. Korrosionsschutzvorrichtung nach einem der Ansprüche 1 bis 7, **dadurch gekennzeichnet, dass** mit der Überwachungseinheit (5) eine Überwachung von mit der Regeleinheit (4) zu regelnden Größen erfolgt.

9. Korrosionsschutzvorrichtung nach einem der Ansprüche 1 bis 8, **dadurch gekennzeichnet, dass** die Überwachungseinheit (5) ausgebildet ist, bei Ein- beziehungsweise Ausschalten des elektronischen Relais (7) Ein- und Ausschaltpotentiale als Korrosionsschutzparameter zu erfassen.

10. Korrosionsschutzvorrichtung nach einem der Ansprüche 1 bis 9, **dadurch gekennzeichnet, dass** die Überwachungseinheit (5) eine Fernüberwachungseinheit bildet.

11. Korrosionsschutzvorrichtung nach einem der Ansprüche 1 bis 10, **dadurch gekennzeichnet, dass** diese eine Mehrfachanordnung von Spannungsquellen (3) und zugeordneten Überwachungseinheiten (5) aufweist.

## Claims

1. Anti-corrosion device (1) for a pipeline (2) conducting a liquid or gaseous medium, with a voltage source (3) generating an electrical voltage and a regulating unit (4) by means of which a regulated voltage or a regulated current is generated and can be supplied to the pipeline (2), **characterised in that** a monitoring unit (5) for detecting anti-corrosion parameters is provided, that the regulating unit (4) comprises an electronic relay (7) activated by means of pulse-width modulation, that the regulating unit (4) together with the electronic relay (7) is integrated in the monitoring unit (5) and that the electronic relay (7) is used not only for carrying out regulating processes, but also for carrying out monitoring functions.

2. Anti-corrosion device according to claim 1, **characterised in that** the electronic relay (7) comprises switching elements consisting of semiconductors.

3. Anti-corrosion device according to one of claims 1 and 2, **characterised in that** switching-on and switching-off times of the electronic relay (7) are predetermined by means of the pulse-width modulation.

4. Anti-corrosion device according to any one of claims 1 to 3, **characterised in that** the voltage source (3) is formed by a power supply unit.

5. Anti-corrosion device according to any one of claims 1 to 4, **characterised in that** a voltage source (3) in the form of a battery or an accumulator is provided.

6. Anti-corrosion device according to any one of claims 1 to 5, **characterised in that** the monitoring unit (5) is installed between the voltage source (3) and the pipeline (2).

7. Anti-corrosion device according to any one of claims 1 to 6, **characterised in that** the monitoring unit (5) is constructed to monitor the voltage and/or current supplied to the pipeline (2).

8. Anti-corrosion device according to any one of claims 1 to 7, **characterised in that** monitoring of variables to be regulated by the regulator unit (4) is carried out by the monitoring unit (5).

9. Anti-corrosion device according to any one of claims 1 to 8, **characterised in that** the monitoring unit (5) is constructed to detect switching-on and switching-off potentials as anticorrosion parameters when switching-on or switching-off of the electronic relay (7) takes place.

10. Anti-corrosion device according to any one of claims 1 to 9, **characterised in that** the monitoring unit (5) forms a remote monitoring unit.

11. Anti-corrosion device according to any one of claims 1 to 10, **characterised in that** this comprises a multiple arrangement of voltage sources (3) and associated monitoring units (5).

## Revendications

1. Dispositif (1) de protection anticorrosion dévolu à un conduit tubulaire (2) charriant un fluide liquide ou gazeux, comprenant une source de tension (3) engendrant une tension électrique, et une unité de régulation (4) au moyen de laquelle une tension régulée ou un courant régulé est engendré(e) et peut être délivré(e) audit conduit tubulaire (2), **caractérisé par le fait qu'**une unité de surveillance (5) est prévue pour détecter des paramètres de protection anticorrosion ; **par le fait que** l'unité de régulation (4) comporte un relais électronique (7) piloté par modulation de largeurs d'impulsions ; **par le fait que** ladite unité de régulation (4) est intégrée dans ladite unité de surveillance (5) avec le relais électronique (7) ; et **par le fait que** ledit relais électronique (7) est utilisé tant pour l'exécution de processus de régulation, que pour l'exécution de fonctions de surveillance.

2. Dispositif de protection anticorrosion selon la revendication 1, **caractérisé par le fait que** le relais électronique (7) présente des éléments de commutation constitués de semi-conducteurs.

3. Dispositif de protection anticorrosion selon l'une des revendications 1 ou 2, **caractérisé par le fait que** des temps d'enclenchement et de déclenchement du relais électronique (7) sont préétablis au moyen de la modulation de largeurs d'impulsions.

4. Dispositif de protection anticorrosion selon l'une des revendications 1 à 3, **caractérisé par le fait que** la source de tension (3) se présente comme un bloc d'alimentation de secteur.

5. Dispositif de protection anticorrosion selon l'une des revendications 1 à 4, **caractérisé par le fait qu'**il est prévu une source de tension (3) revêtant la forme d'une batterie ou d'un accumulateur.

6. Dispositif de protection anticorrosion selon l'une des revendications 1 à 5, **caractérisé par le fait que** l'unité de surveillance (5) est intégrée entre la source de tension (3) et le conduit tubulaire (2).

7. Dispositif de protection anticorrosion selon l'une des revendications 1 à 6, **caractérisé par le fait que** l'unité de surveillance (5) est réalisée en vue de surveiller la tension et/ou le courant délivré(e)(s) au conduit tubulaire (2).

8. Dispositif de protection anticorrosion selon l'une des revendications 1 à 7, **caractérisé par le fait qu'**une surveillance de grandeurs, conçues pour être régulées par l'unité de régulation (4), est effectuée par l'unité de surveillance (5).

9. Dispositif de protection anticorrosion selon l'une des revendications 1 à 8, **caractérisé par le fait que** l'unité de surveillance (5) est réalisée de manière à détecter des potentiels d'enclenchement et de déclenchement, en tant que paramètres de protection anticorrosion, respectivement lors d'un enclenchement et d'un déclenchement du relais électronique (7).

10. Dispositif de protection anticorrosion selon l'une des revendications 1 à 9, **caractérisé par le fait que** l'unité de surveillance (5) constitue une unité de télésurveillance.

11. Dispositif de protection anticorrosion selon l'une des revendications 1 à 10, **caractérisé par le fait que** ledit dispositif comporte un agencement multiple de sources de tension (3) et d'unités de surveillance (5).
